# EUROPEAN PATENT SPECIFICATION

(11) **EP 2 551 500 B1**
(45) Date of publication and mention of the grant of the patent: **30.05.2018**
(21) Application number: 10858119.0
(22) Date of filing: 06.10.2010
(51) Int. Cl.: F02D 41/38, F02D 41/04, F02D 45/00, F02D 41/40

(54) **COMBUSTION CONTROL DEVICE FOR INTERNAL COMBUSTION ENGINE**
VERBRENNUNGSSTEUERUNGSVORRICHTUNG FÜR EINEN VERBRENNUNGSMOTOR
DISPOSITIF DE COMMANDE DE COMBUSTION POUR MOTEUR À COMBUSTION INTERNE

(43) Date of publication of application: 30.01.2013
(73) Proprietor: TOYOTA JIDOSHA KABUSHIKI KAISHA, Toyota-shi, Aichi-ken, 471-8571 (JP)
(72) Inventor: NADA, Mitsuhiro, Toyota-shi, Aichi-ken, 471-8571 (JP)
(74) Representative: TBK
(86) International application number: PCT/JP2010/067547
(87) International publication number: WO 2012/046311

(56) References cited:
- WO-A1-2009/087715
- DE-A1-102007 022 850
- FR-A1- 2 904 660
- JP-A- 2001 159 360
- JP-A- 2003 106 205
- JP-A- 2005 048 703
- JP-A- 2009 030 494
- JP-A- 2009 299 490
- JP-A- 2010 065 569
- US-A- 5 119 780
- US-A1- 2008 167 786
- US-A1- 2010 030 453

## Description

### Technical Field

The present invention relates to a combustion control apparatus of an internal combustion engine of a compression self-igniting type typified by a diesel engine. In particular, the present invention relates to measures to secure the stability of combustion when there occurs a factor that the combustion in a combustion chamber deteriorates.

### Background Art

Conventionally, as there has been known, in diesel engines used as an automobile engine and the like, a pilot injection is carried out to suppress a rapid increase of combustion pressure and combustion temperature at an initial stage of combustion stroke in a combustion chamber and achieve the reduction of combustion noise and the reduction of nitrogen oxides (NOx) included in the exhaust (for example, see JP 2009-299490 A).

That is, a main injection is executed in a state where the interior of a cylinder is preheated by self-ignition of fuel injected in the pilot injection (preheated by premixed combustion), which moderates the increase of the combustion pressure and the combustion temperature at the initial stage of the combustion stroke of the fuel injected in the main injection. Accordingly, this stabilizes the combustion of the fuel injected in the main injection and achieves the reduction of the combustion noise and the reduction of the amount of NOx produced.

### Summary of the Invention

### Problems to be Solved by the Invention

However, with respect to the diesel engines, in a case where a fuel property (cetane number) is inferior to a standard one, there is the possibility that an ignition delay of the premixed combustion in the pilot injection (delay period of premixed combustion start) increases.

That is, when fuel having a low cetane number is used (fuel having a cetane number lower than that of standard diesel oil (for example, a cetane number is the extent of "55"), the ignitability deteriorates due to the deviation of the cetane number from the standard fuel, which leads to an increase of the ignition delay of the premixed combustion.

Thus, in the case where the ignition delay of the premixed combustion increases, the ignition delay of fuel injected in the main injection increases due to a lack of preheating in the cylinder, and in a few cases, there is the possibility of leading to the accidental fire in the combustion chamber.

Specifically, to describe the deterioration of ignitability due to the low cetane number fuel, when the ignition delay increases due to the use of the low cetane number fuel (the ignition delay of the fuel injected in the pilot injection and the ignition delay of the fuel injected in the main injection), the engine revolution does not reach a target revolution, and in an engine system including a turbocharger, a supercharging delay occurs due to the deterioration of a turbo-supercharging efficiency. This supercharging delay causes a delay in increasing in-cylinder pressure, and with this delay, there occurs a delay in increasing an in-cylinder temperature. As a result, the ignition timing of the fuel is further delayed. Thus, the deterioration of combustion in the cylinder is encouraged due to the delay in the ignition timing and the inferior fuel property (low cetane number), and in a few cases, there is the possibility of leading to the accidental fire.

As the measures to prevent an occurrence of the accidental fire, it is conceivable that the injection timing of the pilot injection is transferred to an advance angle side, and the fuel injection amount of the pilot injection is increased.

However, when the injection timing is transferred to the advance angle side, there is the possibility that an equivalent ratio in a combustion field becomes lean, which leads to an increase of the amount of generated HCs, or the penetration (penetration force) of the injected fuel is relatively increased, and the injected fuel is attached to the inner wall surfaces of the cylinder, and the attached fuel causes the dilution of a lubricant.

Also, when the fuel injection amount is increased, the total heat amount increases by that amount to be increased, but there is a possibility that an endothermic amount in endothermic reaction increases at the time of the fuel injection, and the vaporization of the fuel is delayed, which leads to an increase of combustion noise along with the ignition delay of the fuel injected in the pilot injection.

It is conceivable that the amount of the advance angle of the injection timing and the proportion of the increased amount of the fuel injection are limited so as to restrain each failure to the minimum with each effect exerted, but in this case, it is necessary to obtain the injection timing and the fuel injection amount through the execution of conformity (construction of injection patterns in accordance with each engine type) by trial and error, and it is difficult to determine whether the injection timing and the fuel injection amount are optimal, and it is necessary to carry out an experiment with a practical vehicle for each engine type, which requires a great effort in the conformity work.

There has been proposed JP 2004-340 026 A as an improvement of combustibility in the case where the low cetane number fuel is used. In JP 2004-340 026 A, an engine exciting force is detected by in-cylinder pressure, a cetane number is determined based on correlation data between the engine exciting force and the cetane number. When there is the low cetane number fuel, the fuel injection pressure is rapidly increased, and subsequently, after operation of several cycles, the fuel injection pressure is gradually decreased to the original pressure. However, when the fuel injection pressure is rapidly increased as described above, there is a possibility that a rapid increase of the penetration (penetration force) of the fuel causes the increase of the amount of generated HCs, and the fuel attached to the wall surfaces causes the dilution of a lubricant, which is not preferable.

Furthermore, a combustion control apparatus according to the preamble of claim 1 is known from DE 10 2007 022 850 A1.

A further combustion control apparatus is disclosed in FR 2 904 660 A1.

The present invention has been achieved in view of the above circumstances to solve the technical problems, and it is an object of the present invention to provide a combustion control apparatus of an internal combustion engine to suppress an ignition delay of premixed combustion and prevent an accidental fire by carrying out an appropriate in-cylinder preheating when fuel having a fuel property (cetane number) inferior to a standard one is used, and there occurs a factor that the combustion in a combustion chamber deteriorates.

### Means of Solving the Problems

### -Principle of Solution to the Problems-

The principle of solution of the present invention to achieve the above object is such that when there occurs combustion deterioration contributing to a lack of preheating in the in-cylinder preheating period at an initial stage of combustion start in the combustion chamber or when an occurrence of the combustion deterioration is assumed, fuel injection pressure is reduced. Thus, the volume of the combustion field of fuel injected for preheating is reduced, and the density of a normal cetane (straight chain molecular structure that allows the low-temperature oxidation reaction) existed in the combustion field is enhanced, so as to increase the density of heat energy in the combustion field and achieve a high temperature of the combustion field, that is, adequate in-cylinder preheating. In particular, when fuel having a fuel property (cetane number) inferior to a standard one is used, the fuel injection pressure is reduced, and the volume of the combustion field of the fuel injected is reduced, and the density of a normal cetane existed in the combustion field is enhanced, even in the case of low cetane number fuel, which increases the density of heat energy in the combustion field and achieves a high temperature of the combustion field, that is, adequate in-cylinder preheating.

In detail, according to the present invention, the above object is solved with a combustion control apparatus having the features of claim 1. Further embodiments are defined in the subclaims.

According to the present invention, when fuel (low cetane number fuel) having an inferior property is used, and the ignition delay of the premixed combustion increases due to the deterioration of ignitability, the fuel injection pressure is reduced only by a predetermined amount. Thus, when the fuel injection pressure is reduced only by the predetermined amount, the spray of the fuel injected in the auxiliary injection is collected in a relatively narrow range in the combustion chamber. Accordingly, even if low cetane number fuel is used, the density of the normal cetane (n-cetane) included in the spray, that is, the density of molecular structure body that allows the low-temperature oxidation reaction, is increased. Then, when the air in the cylinder is compressed in the compression process of the internal combustion engine so as to reach a temperature at which the normal cetane can self-ignite (for example, approximately 700K), the normal cetane in the fuel spray self-ignites. Then, the fuel spray is collected in the central portion in the combustion chamber in the state where the fuel injection pressure is set low as described above, which increases the density of heat energy in the combustion field and makes it possible to achieve the high temperature in the combustion field. That is, the interior of the combustion chamber is already adequately preheated at the time of executing the main injection, so that an occurrence of the accidental fire is prevented.

According to the present invention, the fuel injection pressure is reduced only by a predetermined amount set in accordance with required power.

When the fuel injection pressure is reduced only by a predetermined amount set in accordance with required power, a reduction correction amount of the fuel injection pressure is set to be increased as the required power is reduced.

According to these particular matters, the appropriate adjustment of the volume of the spray of the fuel injected in the auxiliary injection is achieved. That is, this prevents the lack of preheating amount due to the excessively-increased volume of the spray and the lack of the amount of oxygen in the combustion field due to the excessively-reduced volume of the spray, and the preheating in the combustion chamber is favorably carried out. Also, in the operating area where the required power is high, a temperature in the cylinders is relatively high, so that the possibility that the accidental fire breaks out is remarkably low, compared with the operating area where the required power is low. Accordingly, it is possible to reduce the reduction correction amount of the fuel injection pressure to be set in the operating area where the required power is high. Conversely, in the operating area where the required power is low, a temperature in the cylinders is relatively low, so that the possibility that the accidental fire breaks out is remarkably high, compared with the operating area where the required power is high. Accordingly, the reduction correction amount of the fuel injection pressure is set to be increased in the operating area where the required power is low, which steadily prevents the occurrence of the accidental fire.

Preferably, the lowest value in a case where the fuel injection pressure is reduced by the fuel injection pressure reduction means may be set, and the fuel injection pressure after correction may be set to a value that is equal to or more than the lowest value.

Thus, the lowest value in the case where the fuel injection pressure is reduced is set, which steadily prevents the lack of the amount of oxygen in the combustion field due to the excessively-reduced volume of the spray of the fuel injected in the auxiliary injection and favorably carries out the preheating in the combustion chamber.

As a method of determining that there occurs the combustion deterioration contributing to the lack of the preheating, in a case where the pilot injection is executed by at least two-time divisional pilot injections, and when a heat production rate in the combustion chamber is less than a predetermined value in a period from the injection completion of a first pilot injection to an execution of a second pilot injection, it may be determined that the combustion deterioration occurs, so as to reduce the fuel injection pressure only by the predetermined amount.

That is, when the environmental conditions and the operational conditions are general standard states, the heat production rate accompanied with the execution of the first pilot injection is equal to or more than the predetermined value in the period from the execution of the first pilot injection to the execution of the second pilot injection. In contrast, when the environmental conditions and the operational conditions are different from general standard states due to the use of fuel having an inferior property and the like, the heat production rate is less than the predetermined value in the period described above due to the ignition delay of the fuel injected in the first pilot injection. When these conditions continue, there is the possibility that the accidental fire breaks out. In detecting this, when the heat production rate in the combustion chamber is less than the predetermined value in the period described above, the fuel injection pressure is reduced only by the predetermined amount, and the density of heat energy in the combustion field is increased, and the interior of the combustion chamber is adequately preheated so as to prevent the occurrence of the accidental fire.

As the control with respect to the main injection in the case where the fuel injection pressure is reduced only by the predetermined amount, as described above, an injection period of the main injection is extended in accordance with the predetermined amount (predetermined amount to reduce the fuel injection pressure).

Thus, the injection amount required in the main injection is secured, which makes it possible to prevent the accidental fire and secure the required power.

### Effects of the Invention

According to the aspect of the present invention, when an ignition delay of premixed combustion in the pilot injection in the combustion chamber increases due to a property of fuel, the fuel injection pressure is reduced. Accordingly, the spray of the fuel injected in the pilot injection is collected in a relatively narrow range in the combustion chamber. Accordingly, even if the low cetane number fuel is used, the density of the normal cetane (n-cetane) included in the spray, that is, the density of molecular structure body that allows the low-temperature oxidation reaction, is increased, which readily allows the self-ignition, so that the ignition delay can be shortened. Then, the volume of the combustion field of fuel injected for preheating is reduced, and the density of heat energy in the combustion field is increased, and the interior in the cylinder is adequately preheated, so that the accidental fire is prevented.

### Brief Description of the Drawings

[FIG. 1] FIG. 1 is a schematic configuration diagram illustrating an engine and a control system for the same according to an embodiment of the present invention.
[FIG. 2] FIG. 2 is a cross-sectional view of a combustion chamber of a diesel engine and its peripherals.
[FIG. 3] FIG. 3 is a block diagram illustrating a configuration of a control system such as an ECU.
[FIG. 4] FIGs. 4 are waveform diagrams illustrating variations of a heat production rate (amount of heat produced per rotation angle unit of a crankshaft) at the time of executing a pilot injection and a main injection and variations of a fuel injection ratio (fuel injection amount per rotation angle unit of the crankshaft).
[FIG. 5] FIG. 5 is a map illustrating a reference target rail pressure setting map that is referred to when reference target rail pressure is determined.
[FIG. 6] FIGs. 6 are diagrams illustrating states of a fuel spray in the combustion chamber at the time of executing the pilot injection, and FIG. 6A is a diagram illustrating a case where fuel injection pressure is set low, and FIG. 6B is a diagram illustrating a case where the fuel injection pressure is set high.
[FIG. 7] FIG. 7 is a rail pressure correction map that is referred to when the fuel injection pressure is corrected by decompression.
[FIG. 8] FIGs. 8 are waveform diagrams illustrating the variations of the heat production rate accompanied with the deterioration in a combustion state and the decompression correction of the fuel injection pressure, and FIG. 8A is a diagram illustrating a heat production rate waveform before the combustion state deteriorates, and FIG. 8B is a diagram illustrating a heat production rate waveform after the combustion state deteriorates, and FIG. 8C is a diagram illustrating a heat production rate waveform in a case where the fuel injection pressure is corrected by decompression.
[FIG. 9] FIG. 9 is a rail pressure correction map with respect to a first modification.
[FIG. 10] FIG. 10 is a rail pressure correction map with respect to a second modification.
[FIG. 11] FIG. 11 is a rail pressure correction map with respect to a third modification.

### Modes for Carrying out the Invention

Embodiments of the present invention will be described below with reference to the drawings. In the present embodiment, description will be given with regard to a case where the present invention is applied to a common rail in-cylinder direct injection multi-cylinder (for example, inline four-cylinder) diesel engine (compression self-igniting internal combustion engine) mounted in an automobile.

### -Engine Configuration-

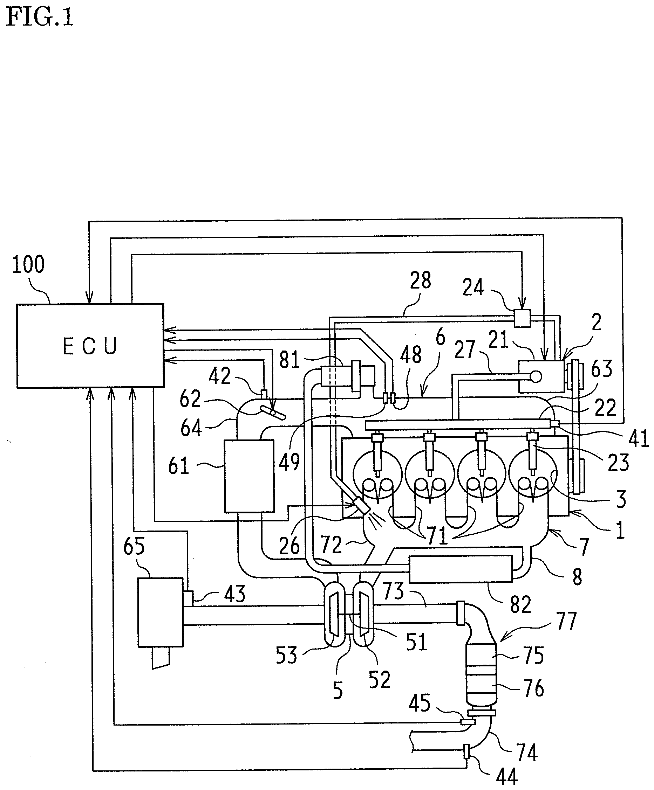

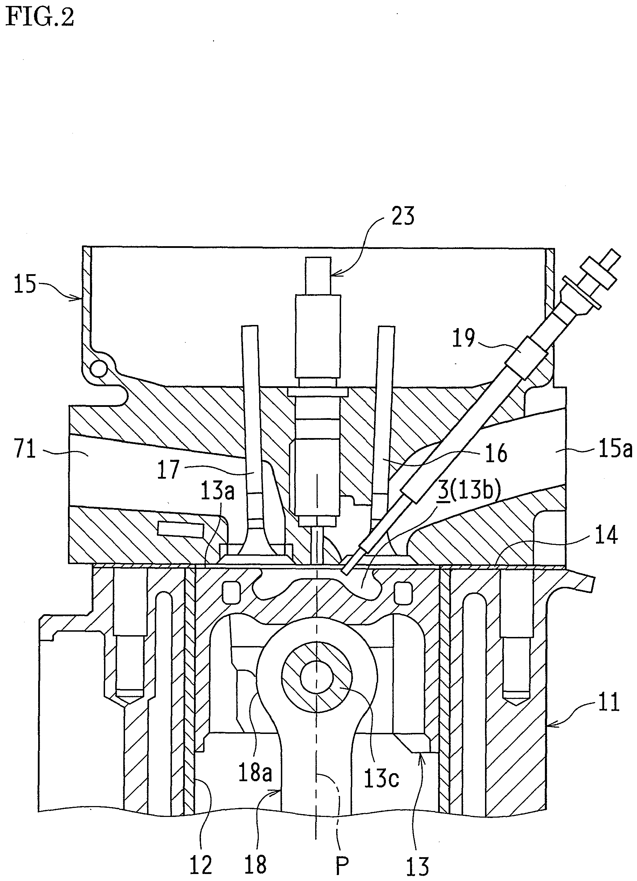

First, a schematic configuration of a diesel engine (hereinafter referred to simply as an engine) to which the present embodiments are applied will be described. FIG. 1 is a schematic configuration diagram illustrating an engine 1 and a control system for the same according to the present embodiments. Also, FIG. 2 is a cross-sectional view of a combustion chamber 3 of the diesel engine and its peripherals.

As shown in FIG. 1, the engine 1 according to the present embodiments is configured as a diesel engine system including, as main units, a fuel supply system 2, the combustion chambers 3, an intake system 6, an exhaust system 7, and the like.

The fuel supply system 2 includes a supply pump 21, a common rail 22, injectors (fuel injection valves) 23, a cutoff valve 24, a fuel addition valve 26, an engine fuel path 27, and an added fuel path 28.

The supply pump 21 draws fuel from a fuel tank, and after putting this drawn fuel under high pressure, supplies that fuel to the common rail 22 via the engine fuel path 27. The common rail 22 has a function as an accumulation chamber where high pressure fuel supplied from the supply pump 21 is held (accumulated) at a predetermined pressure, and distributes this accumulated fuel to each injector 23. The injectors 23 are configured as piezo injectors within which a piezoelectric element (piezo element) is disposed and which supply fuel by injection into the combustion chambers 3 by appropriately opening a valve. The details of control of fuel injection from the injectors 23 will be described later.

Also, the supply pump 21 supplies part of the fuel drawn from the fuel tank to the fuel addition valve 26 via the added fuel path 28. In the added fuel path 28, the cutoff valve 24 is disposed in order to stop fuel addition by cutting off the added fuel path 28 during an emergency.

Also, the fuel addition valve 26 is configured as an electronically controlled opening and closing valve whose opening time is controlled with an addition control operation by an ECU 100, described later, such that the amount of fuel added to the exhaust system 7 is a target addition amount (an addition amount such that the exhaust A/F equals the target A/F), and such that a fuel addition timing is a predetermined timing. That is, a desired amount of fuel from the fuel addition valve 26 is supplied by injection to the exhaust system 7 (to an exhaust manifold 72 from exhaust ports 71) at an appropriate timing.

The intake system 6 includes an intake manifold 63 connected to an intake port 15a formed in a cylinder head 15 (see FIG. 2), and an intake tube 64 constituting an intake path is connected to this intake manifold 63. Also, in this intake path, an air cleaner 65, an airflow meter 43, and a throttle valve (an intake throttle valve) 62 are disposed in this order from the upstream side. The airflow meter 43 outputs an electrical signal corresponding to the amount of air that flows into the intake path via the air cleaner 65.

The exhaust system 7 includes the exhaust manifold 72 connected to the exhaust ports 71 formed in the cylinder head 15, and exhaust tubes 73 and 74 constituting an exhaust path are connected to this exhaust manifold 72. Also, in this exhaust path, a maniverter (exhaust purification apparatus) 77 is disposed that includes a NOx storage catalyst (NSR catalyst: NOx Storage Reduction catalyst) 75 and a DPNR catalyst (Diesel Particulate-NOx Reduction catalyst) 76. These NSR catalyst 75 and DPNR catalyst 76 will be described below.

The NSR catalyst 75 is a storage reduction NOx catalyst and includes, for example, alumina (Al₂O₃) as a support that supports thereon, for example, an alkali metal such as potassium (K), sodium (Na), lithium (Li), and cesium (Cs); an alkaline earth element such as barium (Ba) and calcium (Ca); a rare earth element such as lanthanum (La) and Yttrium (Y); and a precious metal such as platinum (Pt).

The NSR catalyst 75 stores NOx in a state in which a large amount of oxygen is present in the exhaust, while reducing NOx to NO₂ or NO to release NOx in a state in which the oxygen concentration in the exhaust is low and a large amount of a reduction component (for example, an unburned component (HC) of fuel) is present. NOx released as NO₂ or NO is further reduced to N₂ due to quick reaction with HC or CO in the exhaust. Also, by reducing NO₂ or NO, HC and CO themselves are oxidized and thus become H₂O or CO₂. That is, by appropriately adjusting the oxygen concentration or the HC component in the exhaust introduced to the NSR catalyst 75, HC, CO, and NOx in the exhaust can be purified. In the configuration of the present embodiment, the oxygen concentration and the HC component in the exhaust can be adjusted with the operation of adding fuel from the fuel addition valve 26.

Meanwhile, the DPNR catalyst 76 includes, for example, a porous ceramic structure that supports a NOx storage reduction catalyst, so that PM in exhaust gas is captured when passing through a porous wall. When the air-fuel ratio of the exhaust gas is lean, NOx in the exhaust gas is stored in the NOx storage reduction catalyst, while when the air-fuel ratio is rich, the stored NOx is reduced and released. Furthermore, the DPNR catalyst 76 supports a catalyst that oxidizes and burns the captured PM (for example, an oxidization catalyst whose main component is a precious metal such as platinum).

Now, the configuration of the combustion chamber 3 of the diesel engine and peripheral parts of the combustion chamber 3 will be described with reference to FIG. 2. As shown in FIG. 2, in a cylinder block 11 constituting part of the main body of the engine, a cylindrical cylinder bore 12 is formed in each the cylinders (four cylinders), and each cylinder bore 12 vertically slidably accommodates a piston 13.

The combustion chamber 3 is formed on the top side of a top face 13a of the piston 13. That is, the combustion chamber 3 is defined by a lower face of the cylinder head 15 installed on top of the cylinder block 11 via a gasket 14, an inner wall face of the cylinder bore 12, and the top face 13a of the piston 13. In approximately the center of the top face 13a of the piston 13, a cavity (a recessed unit) 13b is disposed in the form of a depression, and the cavity 13b also constitutes part of the combustion chamber 3.

The shape of the cavity 13b is such that the size of depression at the center portion (on a cylinder center line P) is small and gradually increases toward the outer peripheral side. That is, as shown in FIG. 2, when the piston 13 is adjacent to its compression top dead center, the combustion chamber 3 defined by the cavity 13b has a small portion of space of relatively small capacity at the center portion, and a gradually expanded portion of space (which is assumed an expanded space) toward the outer peripheral side.

A small end 18a of a connecting rod 18 is linked to the piston 13 via a piston pin 13c, while a large end of the connecting rod 18 is linked to a crankshaft serving as an engine output shaft. This ensures that the reciprocating movement of the piston 13 within the cylinder bore 12 is transmitted to the crankshaft via the connecting rod 18, which causes the crankshaft to rotate to obtain engine output. Also, a glow plug 19 is disposed facing the combustion chamber 3. The glow plug 19 functions as a starting assistance apparatus that glows by receiving a flow of electrical current immediately before the engine 1 is started, and that receives a blow of part of a fuel spray, thus promoting ignition and combustion.

The cylinder head 15 includes the intake port 15a formed to introduce air to the combustion chamber 3, the exhaust port 71 formed to discharge exhaust gas from the combustion chamber 3, an intake valve 16 disposed to open and close the intake port 15a, and an exhaust valve 17 disposed to open and close the exhaust port 71. The intake valve 16 and the exhaust valve 17 are disposed to face one another across the cylinder center line P. That is, the engine 1 of this example is configured as a cross flow-type engine. Also, the injectors 23, which inject fuel directly into the combustion chamber 3, are mounted in the cylinder head 15. The injectors 23 are disposed in approximately the center above the combustion chamber 3 in upright orientation along the cylinder center line P, and inject fuel introduced from the common rail 22 toward the combustion chamber 3 at a predetermined timing.

Furthermore, as shown in FIG. 1, a supercharger (turbocharger) 5 is disposed in the engine 1. The turbocharger 5 includes a turbine wheel 52 and a compressor wheel 53 that are linked to one another via a turbine shaft 51. The compressor wheel 53 is disposed facing the inside of the intake tube 64, while the turbine wheel 52 is disposed facing the inside of the exhaust tube 73. This ensures that the turbocharger 5 utilizes exhaust flow (exhaust pressure) received by the turbine wheel 52 to rotate the compressor wheel 53, so as to implement what is called a turbocharging operation such as increasing the intake pressure. The turbocharger 5 of the present embodiment is a variable nozzle-type turbocharger, in which a variable nozzle vane mechanism (not shown) is provided on the turbine wheel 52 side. Adjusting the opening degree of the variable nozzle vane mechanism ensures adjustment of the turbocharging pressure of the engine 1.

The intake tube 64 of the intake system 6 includes an intercooler 61 that forcibly cools intake air heated by supercharging with the turbocharger 5. The throttle valve 62 is disposed further downstream than the intercooler 61. The throttle valve 62 is an electronically controlled opening and closing valve whose opening degree is capable of stepless adjustment, and has a function to constrict the area of the path of intake air under predetermined conditions, and thus to adjust (reduce) the supplied amount of intake air.

Also, the engine 1 includes an exhaust gas recirculation path (EGR path) 8 that connects the intake system 6 and the exhaust system 7. The EGR path 8 appropriately recirculates part of the exhaust to the intake system 6 and resupplies the part of the exhaust to the combustion chamber 3, so as to decrease the combustion temperature. Thus, the amount of produced NOx is reduced. Also, the EGR path 8 includes an EGR valve 81 that is opened and closed steplessly under electronic control and is capable of freely adjusting the amount of exhaust flow that flows through the EGR path 8, and an EGR cooler 82 that cools exhaust passing through (recirculates through) the EGR path 8. The EGR path 8, the EGR valve 81, the EGR cooler 82, and the like constitute an EGR apparatus (exhaust gas recirculation apparatus).

### -Sensors-

Various sensors are mounted on the parts of the engine 1 to output signals related to environmental conditions at each part and the operating state of the engine 1.

For example, the airflow meter 43 outputs a detection signal according to an intake air flow amount (intake air amount) on the upstream of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. An A/F (air-fuel ratio) sensor 44 outputs a detection signal that continuously changes according to the oxygen concentration in exhaust on the downstream of the maniverter 77 of the exhaust system 7. An exhaust temperature sensor 45 outputs a detection signal according to the temperature of exhaust gas (exhaust temperature) likewise on the downstream of the maniverter 77 of the exhaust system 7. A rail pressure sensor 41 outputs a detection signal according to the pressure of fuel accumulated in the common rail 22. A throttle opening degree sensor 42 detects the opening degree of the throttle valve 62.

### -ECU-

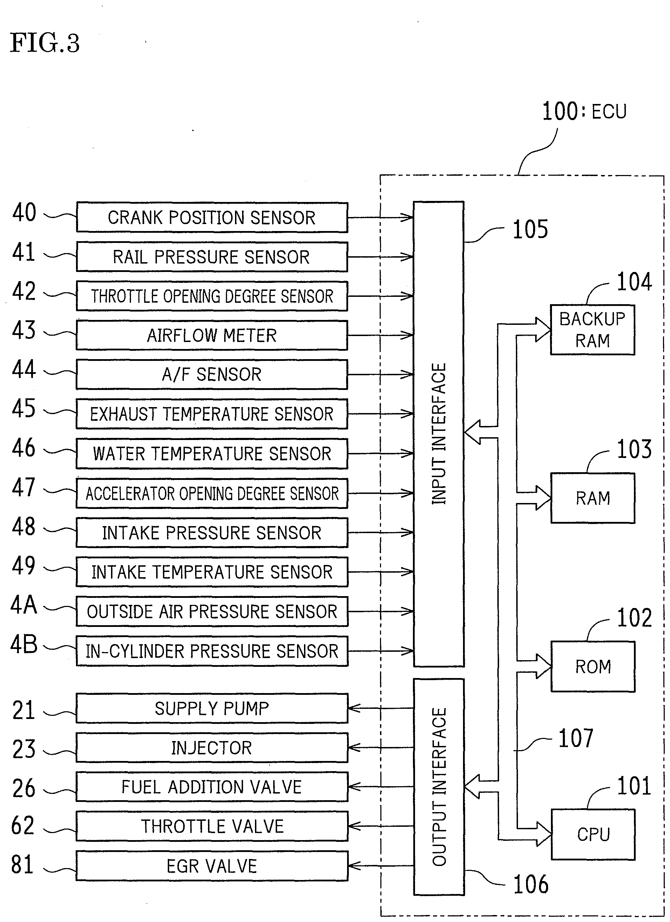

As shown in FIG. 3, the ECU 100 includes a CPU 101, a ROM 102, a RAM 103, and a backup RAM 104. The ROM 102 stores various control programs, maps that are referred to when executing those various control programs, and the like. The CPU 101 executes various arithmetic processes based on the various control programs and maps stored in the ROM 102. The RAM 103 is a memory that temporarily stores results of arithmetic operations with the CPU 101 or data input from the sensors, and the like. The backup RAM 104, for example, is a nonvolatile memory that stores data that needs storing or the like when the engine 1 is stopped.

The CPU 101, the ROM 102, the RAM 103, and the backup RAM 104 above are connected to each other via a bus 107, and are connected to an input interface 105 and an output interface 106.

The rail pressure sensor 41, the throttle opening degree sensor 42, the airflow meter 43, the A/F sensor 44, the exhaust temperature sensor 45, the intake pressure sensor 48, and the intake temperature sensor 49 are connected to the input interface 105. Further connected to the input interface 105 are a water temperature sensor 46 that outputs a detection signal according to the coolant temperature of the engine 1, an accelerator opening degree sensor 47 that outputs a detection signal according to the amount of depressing of an accelerator pedal, a crank position sensor 40 that outputs a detection signal (pulse) at each rotation of an output shaft (crankshaft) of the engine 1 by a predetermined angle, an outside air pressure sensor 4A to detect outside air pressure, an in-cylinder pressure sensor 4B to detect in-cylinder pressure, and the like. Meanwhile, the supply pump 21, the injector 23, the fuel addition valve 26, the throttle valve 62, the EGR valve 81, and the like are connected to the output interface 106. Also, in addition, an actuator (not shown) provided for the variable nozzle vane mechanism of the turbocharger 5 is connected to the output interface 106.

Then, the ECU 100 executes various kinds of control of the engine 1 based on the output of the various sensors described above, mathematical values obtained by a mathematical formula in which the values of the output are used, and the various maps stored in the ROM 102.

For example, as the control of fuel injection of the injectors 23, the ECU 100 executes a pilot injection (auxiliary injection) and a main injection (main injection).

The pilot injection is an operation that pre-injects a small amount of fuel prior to the main injection from the injectors 23. Also, the pilot injection is an injection operation for suppressing an ignition delay of fuel in the main injection, thus leading to stable diffusion combustion, which is also referred to as auxiliary injection. Also, the pilot injection according to the present embodiment not only serves as the function of suppressing an initial combustion speed in the main injection described above, but also serves as a function of performing preheating to raise the temperature inside the cylinder. That is, after execution of the pilot injection, fuel injection is temporarily interrupted, and the temperature of compressed gas (temperature in the cylinder) is adequately increased to reach the fuel self-ignition temperature (for example, 1000K) before the main injection is started. This ensures satisfactory ignition of fuel injected in the main injection.

With respect to the pilot injection, there is a case where the pilot injection is executed at one time to supply a fuel amount that is necessary for preheating and there is a case where the pilot injection is executed at a plurality of times (divisional pilot injection). For example, when the total pilot injection amount is set is equal to or more than a predetermined amount, the divisional pilot injection is executed at a plurality of times, which suppresses an absorbed heat amount at the combustion start time of the fuel injected in each divisional pilot injection. In an in-cylinder preheating operation described later, the case will be described where the pilot injection is executed at two times. As there has been generally known, the injection timing and the injection amount of the pilot injection are set in accordance with the pilot injection timing setting map and the pilot injection amount setting map that are produced in advance based on an experiment, a simulation, or the like.

The main injection is an injection operation for generating a torque of the engine 1 (torque-generating fuel supply operation). The amount of injection in the main injection is basically determined according to the operating state, such as engine revolution, amount of accelerator operation, coolant temperature, and intake air temperature, so as to obtain a required torque. For example, a higher torque required value of the engine 1 is obtained as the engine revolution (engine revolution calculated based on the detection value of the crank position sensor 40) increases, and as the accelerator operation amount (amount of depressing of the accelerator pedal detected by the accelerator opening degree sensor 47) increases (as the accelerator opening degree increases). Accordingly, a large fuel injection amount is set in the main injection. Also, when the interior of the cylinder is adequately preheated by the pilot injection, the fuel injected in the main injection is immediately exposed to the temperature environment of equal to or higher than a self-ignition temperature, and thus thermolysis progresses, and after the injection, the combustion immediately starts.

Specifically, an ignition delay of fuel with respect to the diesel engine is caused by a physical delay and a chemical delay. The physical delay is attributed to a time required for the evaporation and mixture of fuel droplets, which depends on the gas temperature of combustion field. In contrast, the chemical delay is attributed to a time required for chemical combination and decomposition and oxidation heat generation of fuel vapor. Then, when the interior of the cylinder is adequately preheated by the premixed combustion as described above, the physical delay is kept to the minimum. As the result, the ignition delay is kept to the minimum. Accordingly, as to the combustion form of the fuel injected by the main injection, the premixed combustion is hardly involved, but the diffusion combustion is largely involved. As a result, the control of injection timing in the main injection approximately becomes equal to the control of a start timing of the diffusion combustion, so that the controllability of combustion greatly is improved. That is, a ratio of the premixed combustion of fuel injected by the main injection is kept to the minimum, so that the controllability of combustion can greatly be improved based on the control of a heat production rate waveform (ignition timing and amount of heat produced) in which the fuel injection timing and the fuel injection amount of the main injection are controlled (injection ratio waveform is controlled).

It is noted that, in addition to the pilot injection and the main injection described above, after-injection or post-injection is executed as needed. The after-injection is an injection operation for increasing the exhaust gas temperature. Specifically, the after-injection is executed at a timing such that the combustion energy of fuel supplied is not converted to the torque of the engine 1, but rather, a majority of the combustion energy is obtained as exhaust heat energy. The post-injection is an injection operation for achieving an increase in temperature of the maniverter 77 by directly introducing fuel to the exhaust system 7. For example, the post injection is executed when the deposited amount of PM captured by the DPNR catalyst 76 exceeds a predetermined amount (which is detected by, for example, detecting a difference in pressure between the front and rear of the maniverter 77).

Also, the ECU 100 controls an opening degree of the EGR valve 81 according to the operating state of the engine 1 and adjusts an exhaust gas recirculation amount (EGR amount) toward the intake manifold 63. The EGR amount is set in accordance with an EGR map stored in advance in the ROM 102. Specifically, the EGR map is a map to determine the EGR amount (EGR ratio) according to parameters such as the engine revolution and the engine load. It is noted that the EGR map is produced in advance based on experiment, simulation, or the like. That is, the engine revolution calculated based on the detection value of the crank position sensor 40 and the opening degree (corresponding to the engine load) of the throttle valve 62 detected by the throttle opening degree sensor 42 are applied to the EGR map, so that the EGR amount (opening degree of the EGR valve 81) is obtained.

### -Reference Target Rail Pressure-

Next, reference target rail pressure (reference fuel injection pressure) will be described that is applied in a case where various conditions (environmental conditions and the like) depending on the operating states of the engine 1 are general standard states.

Generally, the reference target value of the fuel pressure supplied from the common rail 22 to the injectors 23, that is, the reference target rail pressure, is set to increase as the engine load (engine load) increases, and as the engine revolution (engine revolution) increases. That is, when the engine load is high, a large amount of air is drawn into the combustion chamber 3, so that it is necessary to inject a large amount of fuel into the combustion chamber 3 from the injectors 23. This necessitates high injection pressure from the injectors 23. When the engine revolution is high, the period during which injection is executable is short, so that it is necessary to inject a large amount of fuel per unit time. This necessitates high injection pressure from the injectors 23. Thus, the reference target rail pressure is generally set based on the engine load and the engine revolution. A concrete method of setting the reference target rail pressure will be described later.

Fuel injection parameters for the pilot injection, the main injection, and the like have optimum values that vary according to the temperature conditions of the engine 1, intake air, and the like.

For example, the ECU 100 adjusts the amount of fuel discharged by the supply pump 21 such that the common rail pressure equals to the reference target rail pressure set based on the engine operating state, that is, such that the fuel injection pressure matches the reference target rail pressure. Also, the ECU 100 determines the fuel injection amount and the form of fuel injection based on the engine operating state. Specifically, the ECU 100 calculates an engine revolution speed based on the detection value of the crank position sensor 40 and obtains an amount of depressing of the accelerator pedal (accelerator opening degree) based on the detection value of the accelerator opening degree sensor 47, and determines the reference target rail pressure based on the engine revolution speed and the accelerator opening degree.

In the present embodiments, when combustion deterioration contributing to the lack of preheating occurs in the preheating period at an initial stage of the combustion start in the combustion chamber 3 (specifically, a period during which the interior of the cylinder is preheated with the combustion of fuel injected in the pilot injection) or when it is assumed that there is a possibility that the combustion deterioration occurs, decompression correction is carried out for the reference target rail pressure (reduction operation of fuel injection pressure by means of a fuel injection pressure reduction means), which is set as target rail pressure. The decompression correction for the reference target rail pressure will be described in detail later.

### -Setting of Reference Target Rail Pressure-

Next, a setting method of the reference target rail pressure and a reference target rail pressure setting map will specifically be described. First, a technical concept will be described regarding a case where the reference target rail pressure is set.

In the diesel engine 1, it is important to simultaneously fulfill each of the demands such as an improvement in exhaust emissions by reducing the amount of NOx generated, a reduction in combustion noise during the combustion stroke, and securement of sufficient engine torque. As a technique for simultaneous fulfillment of the demands, it is effective to appropriately control the changing state of the heat production rate (changing state represented in the form of a heat production rate waveform) in the cylinder during the combustion stroke. As the method of controlling the changing state of the heat production rate, a reference target rail pressure described below is set.

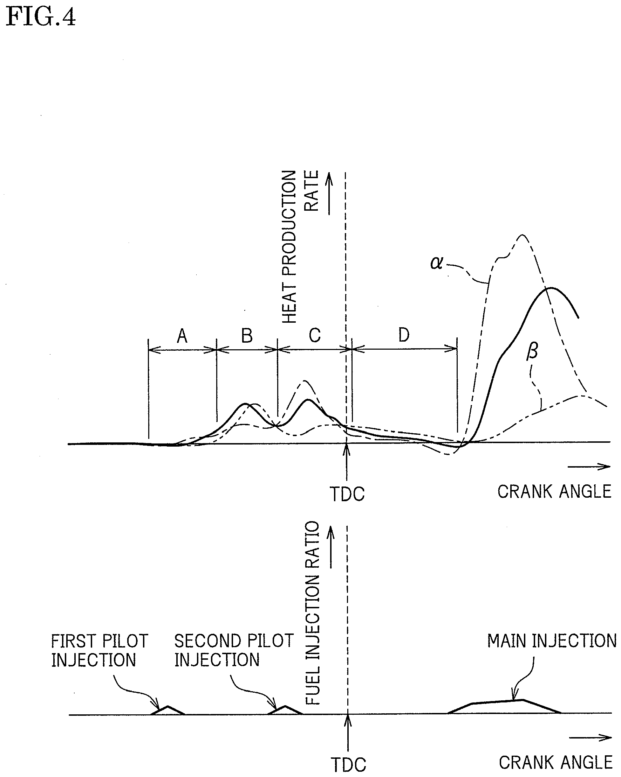

The solid line in the waveform shown in the upper section of FIG. 4 is an ideal heat production rate waveform regarding the combustion of fuel injected in the pilot injection at two times and the main injection at one time, where the horizontal axis represents the crank angle, and the vertical axis represents the heat production rate. In this figure, TDC indicates a crank angle position corresponding to the compression top dead center of the piston 13. The waveform shown in the lower section of FIG. 4 is an injection ratio (fuel injection amount per rotation angle unit of the crankshaft) waveform of fuel injected from the injectors 23.

In the heat production rate waveform, for example, the combustion of the fuel injected in the main injection is started at a predetermined timing after the compression top dead center (TDC) of the piston 13, and the heat production rate reaches a maximum value (peak value) at a predetermined piston position after the compression top dead center of the piston 13 (for example, a time point of 10 degrees after compression top dead center (ATDC 10°)). Implementing the combustion of the mixture with this changing state of the heat production rate ensures that the combustion of about 50% of the mixture in the cylinder is complete at a time point of, for example, 10 degrees after combustion top dead center (ATDC 10°). That is, with the time point of 10 degrees (ATDC 10°) after compression top dead center acting as a combustion center of gravity, about 50% of the total amount of heat produced in the expansion process is produced no later than ATDC 10°. This ensures high thermal efficiency in operating the engine 1.

In the manner described above, the fuel by the main injection, which is executed after the interior of the cylinder is adequately preheated by the pilot injection, is immediately exposed to a temperature environment of equal to or higher than a self-ignition temperature, and thus thermolysis progresses, and after the injection, the combustion (mostly, diffusion combustion) immediately starts.

Also, the waveform shown in a dashed-dotted line α in FIG. 4 is a heat production rate waveform in a case where the fuel injection pressure is set higher than an appropriate value, and both a combustion speed and a peak value of fuel injected in the main injection are too high, which is in a state where there is an apprehension in that combustion noise increases, and the amount of generated NOx increases. Also, in this case, the fuel injected in the pilot injection is diffused in a relatively wide range in the combustion chamber 3, which reduces the density of heat energy and makes it difficult to achieve a high temperature in the combustion field. In contrast, a waveform shown in a dashed double-dotted line β in FIG. 4 is a heat production rate waveform in a case where the fuel injection pressure is set lower than an appropriate value, and the combustion speed of fuel injected in the main injection is low, and the timing of arriving the peak is remarkably transferred to the delay angle side, which is a state where there is an apprehension in that the engine torque cannot adequately be secured. Also, in this case, the fuel injected in the pilot injection is excessively concentrated in the central portion in the combustion chamber 3, which causes an increase in the ignition delay along with the lack of the amount of oxygen in the combustion field.

Incidentally, the parameters with regard to the control of combustion in each period of the heat production rate waveform above will be described. First, a period A (pilot injection at the first time (hereinafter referred to an injection as a first pilot injection) in FIG. 4 is executed, and is a period of the initial stage of combustion start of the fuel injected in the first pilot injection) is a period during which the combustion of the spray rate-controlling depending on the diameter of a particle of a normal cetane (n-cetane : straight chain molecular structure that allows the low-temperature oxidation reaction) included in a fuel spray is executed. Also, a period B in FIG. 4 (combustion period of the fuel injected in the first pilot injection) is a period during which the combustion of spray rate-controlling depending on the combustible mixture amount in the spatial distribution of the fuel spray is executed. Also, a period C in FIG. 4 (pilot injection at the second time (hereinafter referred to an injection as a second pilot injection) is executed and is a period in which the fuel injected in the second pilot injection is combusted) is a period during which the combustion of the oxygen rate-controlling depending on the combustible mixture amount due to residual oxygen in the combustion field. Further, a period D in FIG. 4 (period up to the time when the main injection starts after the combustion of the fuel injected in the second pilot injection) is a period during which the combustion of spray rate-controlling depending on the combustible mixture amount based on the oxygen diffusion speed in the combustion chamber 3 is executed.

### (Reference Target Rail Pressure Setting Map)

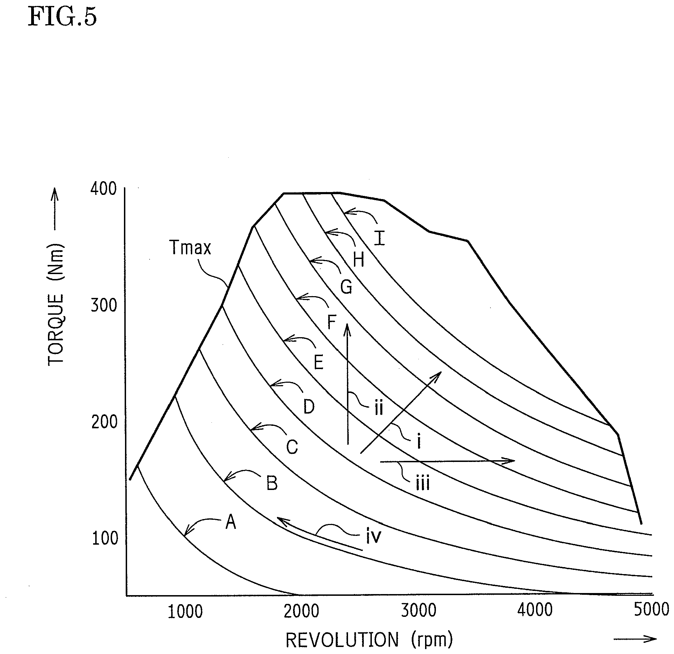

FIG. 5 is the reference target rail pressure setting map that is referred to in the case when the reference target rail pressure is determined. For example, the reference target rail pressure setting map is stored in the ROM 102. Also, in the reference target rail pressure setting map, the horizontal axis represents the engine revolution, and the vertical axis represents the engine torque. Also, Tmax in FIG. 5 is shown the maximum torque line.

The reference target rail pressure setting map is characterized in that a uniform fuel injection pressure line (uniform fuel injection pressure area) as shown in lines A to I in the diagram is allotted to a uniform power line (uniform output area) of a required output (required power) with respect to the engine 1, which is obtained based on the amount of depressing of the accelerator pedal and the like. That is, in the reference target rail pressure setting map, it is configured to be set in a manner that the uniform power line approximately corresponds with the uniform fuel injection pressure line.

The fuel pressure is determined in accordance with the reference target rail pressure setting map, and a valve opening period (injection ratio waveform) of the injectors 23 is controlled, so that a fuel injection amount during the valve opening period can be specified, and the simplification and the appropriate adjustment of fuel injection amount control are achieved.

Specifically, a curve A in FIG. 5 is a line of the engine required output having 10 kW to which a line of 66 MPa is allotted as the reference target rail pressure. Hereinafter, similarly, a curve B in FIG. 5 is a line of the engine required output having 20 kW to which a line of 83 MPa is allotted as the reference target rail pressure. A curve C is a line of the engine required output having 30 kW to which a line of 100 MPa is allotted as the reference target rail pressure. A curve D is a line of the engine required output having 40 kW to which a line of 116 MPa is allotted as the reference target rail pressure. A curve E is a line of the engine required output having 50 kW to which a line of 133 MPa is allotted as the reference target rail pressure. A curve F is a line of the engine required output having 60 kW to which a line of 150 MPa is allotted as the reference target rail pressure. A curve G is a line of the engine required output having 70 kW to which a line of 166 MPa is allotted as the reference target rail pressure. A curve H is a line of the engine required output having 80 kW to which a line of 183 MPa is allotted as the reference target rail pressure. A curve I is a line of the engine required output having 90 kW to which a line of 200 MPa is allotted as the reference target rail pressure. Each of these values is not limited, but is appropriately set in accordance with the characteristics of the performance of the engine 1 and the like.

Also, the lines A to I are each such that a ratio of variation amount of the reference target rail pressure to the variation amount of the engine required output is approximately evenly set.

Thus, in accordance with the reference target rail pressure setting map to be produced, the reference target rail pressure in accordance with a required output with respect to the engine 1 is set, whereby carrying out the control of the supply pump 21 and the like.

In any one out of a case where both the engine revolution and the engine torque increase (see an arrow i in FIG. 5), a case where the engine revolution is uniform, and the engine torque increases (see an arrow ii in FIG. 5), and a case where the engine torque is uniform, and the engine revolution increases (see an arrow iii in FIG. 5), the reference target rail pressure is enhanced. Accordingly, when the engine torque (the engine load) is high, the fuel injection amount in accordance with an intake air amount is secured. Also, when the engine revolution is high, the fuel injection amount required is secured in a short period of time by increasing the fuel injection amount per unit time.

In contrast, when the engine revolution and the engine torque are varied, and the engine output after the variation is not varied (see an arrow iv in FIG. 5), the reference target rail pressure that has been set is maintained without variation of the reference target rail pressure. That is, in the variation of the engine operating state along the uniform fuel injection pressure line (corresponding with the uniform power line), the reference target rail pressure is not varied, the combustion form in the ideal heat production rate waveform described above continues. In this case, each of the demands, such as an improvement in exhaust emissions by reducing the amount of NOx generated, a reduction in combustion noise during the combustion stroke, and securement of sufficient engine torque, is continuously and simultaneously fulfilled.

In the manner described above, a reference fuel pressure setting map according to the present embodiment, there is provided an unambiguous correlation between the required output (required power) with respect to the engine 1 and the fuel injection pressure (common rail pressure). Also, when at least one out of the engine revolution and the engine torque is varied, and the engine output is varied, fuel injection is carried out under appropriate fuel pressure corresponding to the variation of the engine output. Conversely, when the engine revolution or the engine torque is varied, the engine output is not varied, the fuel pressure is kept to the appropriate value that has been set before. Accordingly, the changing states of the heat production rate can be brought close to an ideal state across the approximately entire area of the engine operating area.

### -Decompression Correction for Reference Target Rail Pressure-

Next, decompression correction for the reference target rail pressure, which is the features of the present invention, will be described. The decompression correction for the reference target rail pressure is executed in a case where various conditions depending on the operating states of the engine 1 are general standard states, and the fuel injection is carried out under the reference target rail pressure obtained by the reference target rail pressure setting map, and the combustion in the combustion chamber 3 deteriorates due to insufficient preheating in the cylinder by the fuel injected in the pilot injection. Specifically, when an ignition delay of the premixed combustion of the fuel injected in the pilot injection increases due to the use of the low cetane number fuel, the decompression correction for the reference target rail pressure is carried out to secure an adequate preheating amount in the pilot injection, so as to prevent the occurrence of the ignition delay (start delay of diffusion combustion) of the diffusion combustion of the fuel injected in the main injection, which will be specifically be described below.

When the combustion state in the combustion chamber 3 deteriorates due to the use of the low cetane number fuel, the decompression correction for the reference target rail pressure is carried out because there is a possibility that an accidental fire breaks out contributing to an increase of the ignition delay of the premixed combustion of the fuel injected in the pilot injection. That is, the reference target rail pressure obtained by the reference fuel pressure setting map is corrected in accordance with a rail pressure correction map described later, the rail pressure after the correction is set as the target rail pressure so as to carry out the control of the supply pump 21.

More specifically, the operating state of the engine 1 is monitored. When the combustion in the combustion chamber 3 deteriorates due to the use of the low cetane number fuel, the reference target rail pressure is corrected in accordance with the rail pressure correction map (rail pressure correction by the feedback control). Also, when a parameter that is associated with the use of the low cetane number fuel is detected, and the parameter indicates the deterioration of the combustion state in the combustion chamber 3, the reference target rail pressure is corrected in accordance with the rail pressure correction map (rail pressure correction by the feed forward control).

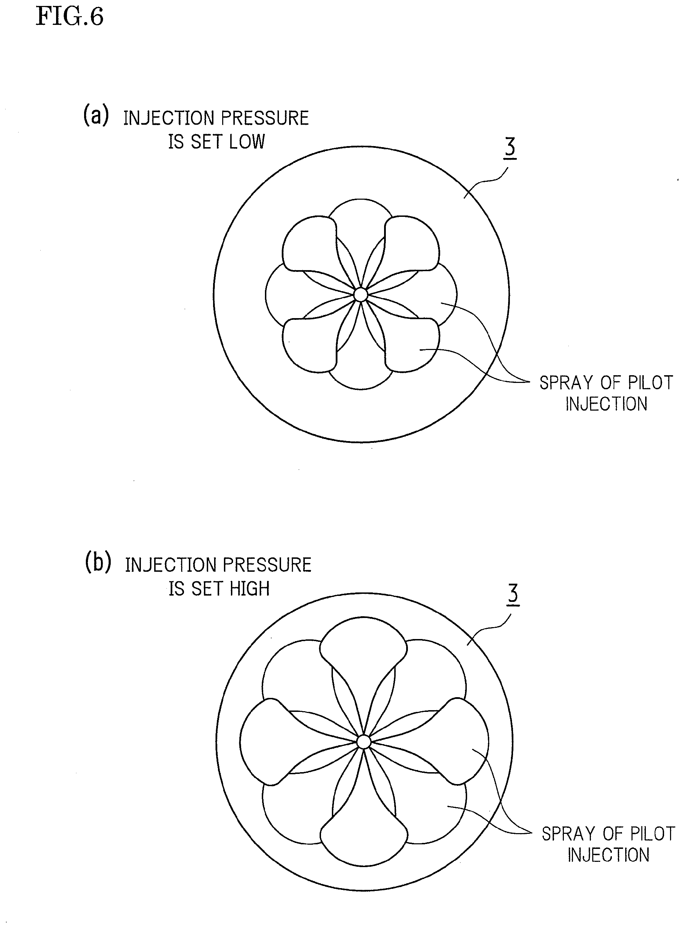

States of a fuel spray in a case where the fuel injection pressure is corrected by decompression will be described. FIGs. 6 show the states of the fuel spray in the combustion chamber 3 when the pilot injection is executed. FIG. 6A is a diagram illustrating a case where the fuel injection pressure is set low, and FIG. 6B is a diagram illustrating a case where the fuel injection pressure is set high.

As shown in FIG. 6B, when the fuel injection pressure is set high, the diameter of the particles of the fuel spray is relatively small, and the fuel spray is diffused in a wide range in the combustion chamber 3. Accordingly, the density of the normal cetane (n-cetane) included in the fuel spray (the amount of the normal cetane included per unit volume of the fuel spray) becomes low (in a wide-area distribution state). The normal cetane has a straight chain molecular structure, which allows the low-temperature oxidation reaction. For example, it is possible to self-ignite at an in-cylinder temperature of approximately 700K. That is, when the air in the cylinder is compressed in the compression process so as to reach approximately 700K, the normal cetane in the fuel spray self-ignites. However, when the fuel injection pressure is set high, the fuel spray is diffused in the wide range in the combustion chamber 3, and heat energy in the combustion field is diffused in the wide range, which leads to the low density of heat energy. When the low cetane number fuel is used, this decrease becomes noticeable, which makes it difficult to achieve a high temperature in the combustion field.

In contrast, As shown in FIG. 6A, when the fuel injection pressure is set low, the diameter of the particles of the fuel spray is relatively large, and the fuel spray is collected in a relatively narrow range in the combustion chamber 3. Accordingly, even if the low cetane number fuel is used, the density of the normal cetane (n-cetane) included in the fuel spray becomes high (in a narrow-area distribution state). Then, when the air in the cylinder is compressed in the compression process so as to reach approximately 700K, and the normal cetane in the fuel spray self-ignites, the fuel spray is collected in the central portion in the combustion chamber 3 in the state where the fuel injection pressure is set low, which increases the density of heat energy in the combustion field and makes it possible to achieve the high temperature in the combustion field.

### < Rail Pressure Correction by Feedback Control>

Next, as the decompression correction for the reference target rail pressure, the rail pressure correction by the feedback control will be described. In this case, the determination on whether the combustion state in the combustion chamber 3 deteriorates due to the use of the low cetane number fuel is carried out based on a heat production rate waveform in the combustion stroke. That is, the heat production rate accompanied with the combustion in the combustion chamber 3 is correlated with in-cylinder pressure. By utilizing the correlation, the heat production rate of the combustion of the fuel injected in the pilot injection is assumed based on the in-cylinder pressure detected by the in-cylinder pressure sensor 4B. Then, when the divisional pilot injection is executed at two times, and when the maximum value of the heat production rate does not reach a predetermined value in a period ranging from the injection completion of the first pilot injection to the injection start of the second pilot injection (for example, when it does not reach 20 J/deg), it is determined that the combustion state in the combustion chamber 3 deteriorates, so as to carry out the decompression correction for the reference target rail pressure. The values described above are not limited to this, but set in advance based on an experiment, a simulation, or the like.

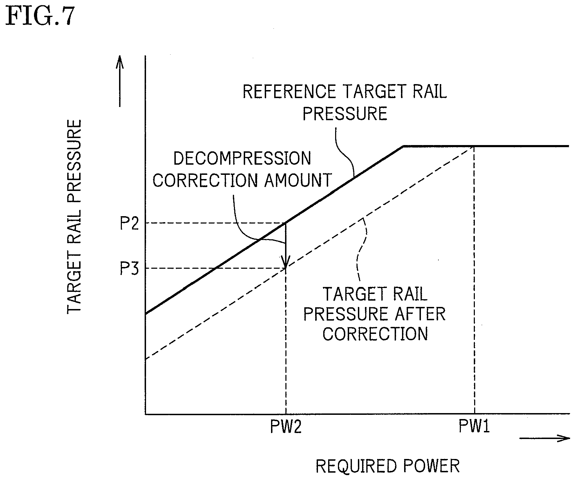

FIG.7 is the rail pressure correction map that is referred to when the fuel injection pressure is corrected by decompression. The rail pressure correction map is a map to set a range to carry out the decompression correction for the reference target rail pressure (range of required power) and a decompression correction amount with respect to the reference target rail pressure in accordance with the required power. That is, when the required power is equal to or less than PW1 in the diagram, and when it is determined that the combustion state in the combustion chamber 3 deteriorates, target rail pressure is set by carrying out the decompression correction for the reference target rail pressure only by a predetermined amount (for example, 30MPa). For example, when the required power is PW2 (for example, 30kW) in the diagram, and the reference target rail pressure obtained by the reference fuel pressure setting map shown in FIG. 5 described above is P2 (for example, 100MPa), and when it is determined that the combustion state deteriorates, the target rail pressure is set to P3 (for example, 70MPa). It is noted that a lower limit value (for example, 50MPa) is set with regard to the target rail pressure. This is because when the target rail pressure is set too low, the volume of the spray of the fuel injected in the pilot injection (combustion field) becomes too small, which leads to a possibility that ignitability deteriorates due to the lack of the amount of oxygen in the combustion field, but this is prevented.

Thus, setting the target rail pressure reduces the penetration (penetration force) of the spray of the fuel injected in the pilot injection, and shortens the travel distance of the spray (see FIG. 6A). Accordingly, this allows the spray to stay in relatively narrow space in the combustion chamber 3, which enhances the density of the normal cetane (n-cetane) included in the spray. As described above, the normal cetane has the straight chain molecular structure, which allows the low-temperature oxidation reaction. For example, it is possible to self-ignite at the in-cylinder temperature of approximately 700K. That is, when the air in the cylinder is compressed in the compression process so as to reach approximately 700K, the normal cetane in the fuel spray self-ignites. In this case, the fuel injection pressure is corrected by decompression, and the density of the normal cetane that is included in the low cetane number fuel is enhanced in the central portion in the combustion chamber 3, and an encounter ratio of carbons (C), which is obtained by the thermolysis of the normal cetane, with oxygen (O₂) existed in the cylinder is enhanced, and oxidation reaction of the carbons is rapidly produced in a narrow area. As a result, the density of heat energy in the combustion field is enhanced, which achieves a high temperature in the combustion field (for example, the temperature increases up to approximately 850K).

Thus, when the high temperature is generated in the combustion field, the second pilot injection is carried out. When the fuel injected in the second pilot injection passes through the combustion field of the fuel injected in the first pilot injection (the combustion field in which the temperature partially increases according to the combustion of the normal cetane), the combustion readily starts upon the reception of the heat amount of the combustion field, which leads to a higher temperature in the cylinder due to this fuel (for example, the temperature increases up to approximately 1000K).

Subsequently, the main injection is executed. When the main injection is executed, the interior of the cylinder is already adequately preheated by each pilot injection (preheated to reach the self-ignition temperature (for example, 1000K) of the fuel (fuel including the molecular structures of the normal cetane and other elements)), which leads to ensure satisfactory ignitability of the fuel injected in the main injection and smoothly transfer to the diffusion combustion.

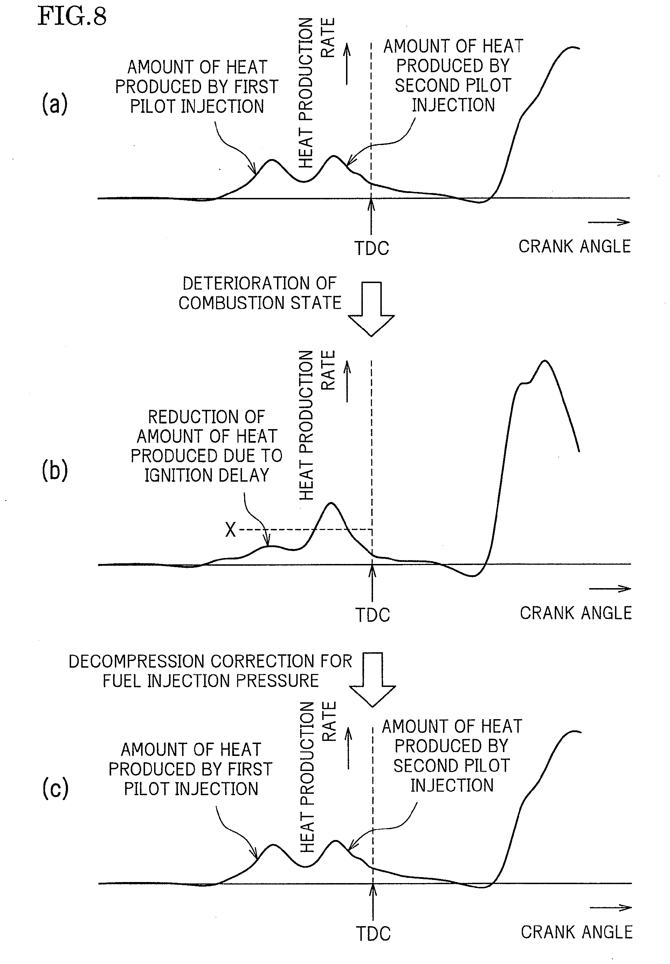

FIGs. 8 are waveform diagrams illustrating the variations of the heat production rate accompanied with the deterioration of combustion state and the decompression correction of fuel injection pressure. First, various conditions are general standard states, and as shown in FIG. 8A, when a condition where the combustion state does not deteriorate (condition that is shown as the ideal heat production rate waveform in the solid line in FIG. 4) transfers to a condition where the travel at highlands and the like are included, the deterioration of combustion state occurs by the influence as shown in FIG. 8B. Thus, the variation of the heat production rate is obtained based on the in-cylinder pressure detected by the in-cylinder pressure sensor 4B so as to carry out the decompression correction for the fuel injection pressure.

Specifically, as described above, when a maximum value of the heat production rate does not reach a predetermined value (threshold value X shown in dashed line in FIG. 8B) in the period ranging from the injection completion of the first pilot injection to the injection start of the second pilot injection (a maximum value of the heat production rate of the fuel injected in the second pilot injection exceeds the threshold value X in FIG.8B), it is determined that the combustion state in the combustion chamber 3 deteriorates, so as to carry out the decompression correction for the reference target rail pressure. That is, when the state of the heat production rate waveform shown in FIG. 8B continues, there is a possibility that the combustion start timing of the pilot injection and the combustion start timing of the main injection are delayed, and an accidental fire breaks out. Accordingly, the decompression correction for the reference target rail pressure is carried out. Thus, as described above, the interior of the cylinder is already adequately preheated by the pilot injection, the heat production rate waveform is returned to an original state before the combustion state deteriorates as shown in FIG. 8C, so as to avoid the accidental fire.

With respect to the heat production rate waveforms as shown in FIGs. 8, the start timing of the first pilot injection is 11 degrees before compression top dead center of the piston 13 (BTDC 11°), and the start timing of the second pilot injection is 4 degrees before compression top dead center of the piston 13 (BTDC 4°), and the start timing of the main injection is 4 degrees after compression top dead center of the piston 13 (ATDC 4°). These values are not limited to this. Also, it is necessary to secure intervals between the fuel injections (injection intervals) in a manner as to adequately carry out the in-cylinder preheating operation described above. The injection intervals are set in advance based on an experiment, a simulation, or the like and are determined, for example, by referring to an interval map that sets each injection interval in accordance with the engine revolution. When each injection interval is defined by the rotation angle of the crankshaft, each injection interval is set longer as the engine revolution increases.

Also, when the decompression correction for the reference target rail pressure is carried out, the fuel injection pressure in the main injection is decompressed. In this case, a longer fuel injection period is set in accordance with the decompression correction amount in such a manner as to secure a fuel injection amount required in the main injection (is set longer than a fuel injection period prior to the implementation of the decompression correction for the reference target rail pressure).

### <Rail Pressure Correction by Feed Forward Control>

Next, rail pressure correction by the feed forward control will be described. In the operation of the rail pressure correction, based on sensing values of each sensor, it is determined whether there is the presence of the possibility that an accidental fire breaks out contributing to a lack of the preheating amount by the combustion of the fuel injected in the pilot injection with the use of the low cetane number fuel. When it is assumed that there is the possibility that the accidental fire breaks out, the reference target rail pressure is corrected by decompression.

(cancelled)

(cancelled)

As to the determination on whether the low cetane number fuel is used, a conventional known determination method (for example, a determination method regarding the low cetane number fuel disclosed by Japanese Unexamined Patent Application Publication No. 2008-309080 is adopted (determination based on the measurement for the time required that ranges from the main injection to the ignition)) can be adopted. Also, a method described later may be applied to the determination on whether the low cetane number fuel is used. That is, when fuel (low cetane number fuel) having a fuel property that is inferior to that of standard fuel is used, the cetane number of fuel is not adequately obtained, and the low-temperature oxidation reaction in the combustion chamber 3 is not sufficient. That is, the ignition delay of the premixed combustion increases, which has adverse effects on the diffusion combustion subsequently to be carried out and leads to a possibility that the deterioration of the combustion state (for example, accidental fire) is induced. Accordingly, it is determined whether there occurs a cyclic degeneration phenomenon with regard to the combustion state with respect to each of a plurality of cylinders (two cylinders or more). When the cyclic degeneration phenomenon with regard to the combustion state occurs, it is determined that the low cetane number fuel having a fuel property that is inferior to that of standard fuel (inferior ignitability) is used.

More specifically, it is determined whether there is the presence of the deterioration of the combustion state based on the revolution variation at the time of the combustion stroke in each cylinder by the detection signal of the crank position sensor 40. For example, the compression top dead center of the each cylinder is set as a reference, a time required to rotate by 120 degrees to a delay angle side from the crank angle (0° CA) serving as the reference is measured. When the time is longer than a predetermined time, it is determined that the degeneration phenomenon of the combustion state occurs in the cylinder in which the combustion stroke is made at the moment.

Thus, it is determined whether there is the presence of the degeneration phenomenon regarding the combustion state at the time of the combustion stroke in each cylinder. When there occurs the cyclic degeneration phenomenon regarding the combustion state in at least two cylinders, it is determined that the fuel property deteriorates, that is, the low cetane number fuel is used.

(cancelled)

(cancelled)

When it is determined that there is the possibility that the low cetane number fuel is used, according to these determination operations, it is assumed that there is the possibility that the combustion state in the combustion chamber 3 deteriorates, so as to carry out the decompression correction for the reference target rail pressure.

That is, as is the case with the feedback control described above, the target rail pressure is set in accordance with the rail pressure correction map.

Thus, setting the target rail pressure reduces the penetration (penetration force) of the spray of the fuel injected in the pilot injection and shortens the travel distance of the spray. Accordingly, this allows the spray to stay in relatively narrow space in the combustion chamber 3, which enhances the density of the normal cetane (n-cetane) included in the spray. In this case, the fuel injection pressure is corrected by decompression, and the density of the normal cetane is enhanced in the central portion in the combustion chamber 3, and an encounter ratio of carbon (C), which is obtained by the thermolysis of the normal cetane, with oxygen (O₂) existed in the cylinder is enhanced, and the oxidation reaction of the carbons is rapidly produced in a narrow area. As a result, the density of heat energy in the combustion field is enhanced, which achieves a high temperature in the combustion field (for example, the temperature increases up to approximately 850K).

As is the case with the feed forward control, when the decompression correction for the reference target rail pressure is carried out, the fuel injection pressure in the main injection is decompressed. In this case, a longer fuel injection period is set in accordance with the decompression correction amount in such a manner as to secure the fuel injection amount required in the main injection (is set longer than a fuel injection period prior to the implementation of the decompression correction for the reference target rail pressure).

(cancelled)

As described above, in a state where the high temperature is generated in the combustion field according to the first pilot injection, the second pilot injection and the main pilot injection are executed. As is the same case with the rail pressure correction by the feedback control described above, satisfactory ignitability of the fuel injected in the main injection is ensured, which leads to smoothly transfer to the diffusion combustion.

(cancelled)

Also, in the present embodiment, the accidental fire is prevented without transferring the injection timing to an advance angle side and increasing the fuel injection amount. That is, when the accidental fire is prevented by transferring the injection timing to the advance angle side, there has been the possibility that an equivalent ratio in the combustion field becomes lean, which leads to an increase of the amount of generated HCs, or the injection fuel is attached to the inner wall surface of the cylinder, and the attached fuel causes the dilution of a lubricant. Also, when the occurrence of the accidental fire is prevented by increasing the fuel injection amount, there has been the possibility that an endothermic amount increases due to endothermic reaction at the time of the fuel injection, and the vaporization of the fuel is delayed, which leads to an increase of combustion noise along with the ignition delay of the fuel injected in the pilot injection. In the present embodiment, this injection timing is not transferred to the advance angle side, and the fuel injection amount is not increased, so that favorable exhaust emissions are maintained, and the accidental fire can be prevented without inducing lubricant inferiority due to the dilution of the lubricant.

The operation in which the rail pressure is returned (reverted) to the reference target rail pressure after the decompression correction for the reference target rail pressure is carried out as described above includes one wherein, after the decompression correction for the reference target rail pressure is started, the rail pressure is once returned to the reference target rail pressure after a predetermined time. In this case, when the combustion state still deteriorates, the decompression correction for the reference target rail pressure is carried out again according to the control operation described above. On this occasion, a period to determine whether the combustion state deteriorates is set to a relatively short time (for example, several milliseconds) during which the accidental fire does not break out even in a state where the combustion state deteriorates.

### -Modifications of Rail Pressure Correction Map-

Next, modifications of the rail pressure correction map, each of which is different from that of the present embodiment described above, will be described.

### <First Modification>

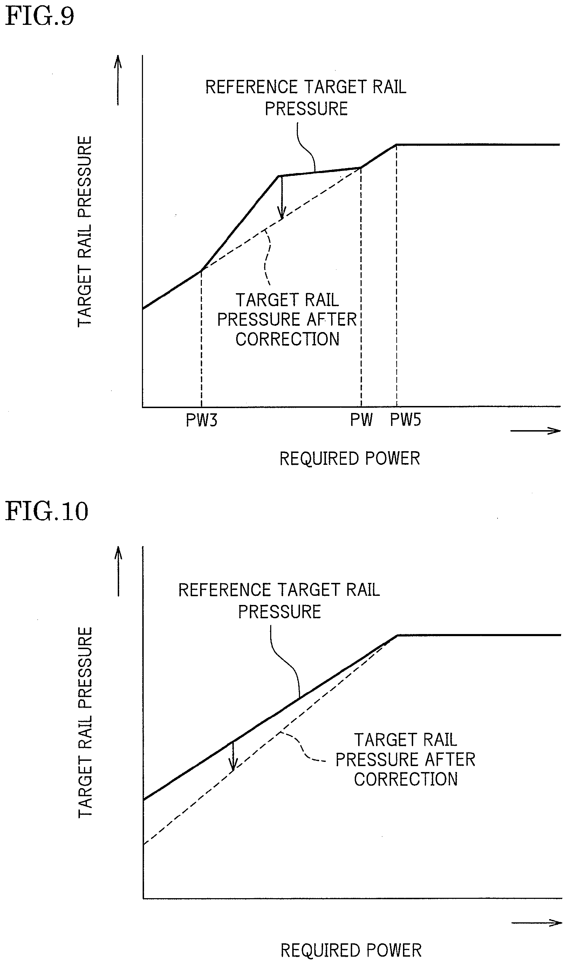

First, in the first modification, the reference target rail pressure is corrected by decompression according to the rail pressure correction map shown in FIG. 9. In a predetermined range of required power (between required power PW3 and PW4 in FIG .9) in the rail pressure correction map shown in FIG. 9, an increase ratio of the reference target rail pressure with respect to an increment of the required power is set high as the target rail pressure before the decompression correction. This is because the reference target rail pressure is set in order to increase the premixed degree of the fuel in the cylinders.

Then, when it is determined that the combustion state in the combustion chamber 3 deteriorates, the reference target rail pressure is corrected by decompression only in the predetermined range of the required power (between required power PW3 and PW4 in FIG .9). More specifically, a correction amount (decompression correction amount) at the central value in the predetermined range of the required power is set to the maximum, and the decompression correction amount is set smaller as it is deviated from the central value. Accordingly, the target rail pressure after the decompression correction is set as a value that is in proportion to the required power in the range in which the required power is equal to or less than PW5 in the diagram.

### <Second Modification>

Also, in a second modification, the reference target rail pressure is corrected by decompression according to the rail pressure correction map shown in FIG. 10. In the rail pressure correction map shown in FIG. 10, the lower the required power is, the higher the decompression correction amount in the case where it is determined that the combustion state deteriorates in the combustion chamber 3 is set.

This is because, when the decompression correction amount is set to be increased in the operating area in which the required power is relatively high, there is a possibility that the power to be required is not adequately generated, and a sense of incongruity is provided for a driver, but this is avoidable. In the operating area where the required power is high, there exists a relatively high temperature in the cylinders, so that the possibility that the accidental fire breaks out is remarkably low, compared with the operating area where the required power is low. Accordingly, it is possible to reduce the decompression correction amount to be set. That is, in the operating area where the required power is high, the engine revolution is high, and the total amount of fuel spray is high, which leads to an increase in the total amount of heat produced per unit time and adequately secures the in-cylinder temperature before ignition. Also, exhaust energy per unit time is high, and the supercharging efficiency in the turbocharger 5 becomes high, which leads to an increase in the in-cylinder pressure. As a result, in the operating area where the required power is high it is possible to prevent the accidental fire without increasing the decompression correction amount to be set. Consequently, in this operating area, the decompression correction amount is set low.

### <Third Modification>

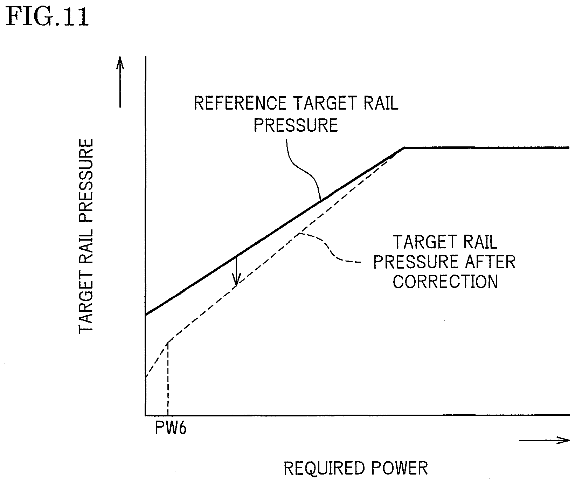

Also, in a third embodiment, the reference target rail pressure is corrected by decompression according to the rail pressure correction map shown in FIG. 11. Similarly, in the rail pressure correction map shown in FIG. 11, the lower the required power is, the higher the decompression correction amount in the case where it is determined that the combustion state deteriorates in the combustion chamber 3 is set. Also, in the rail pressure correction map shown in FIG. 11, in the operating area in which the required power is equal to or less than a predetermined value (equal to or less than PW6 in the diagram), the decompression correction amount in the case where it is determined that the combustion state deteriorates in the combustion chamber 3 is set much higher. According to this, the preheating amount at the time of a low-load operation can remarkably be secured, and the combustion noise at the time of executing the main injection is greatly reduced.

### -Other Embodiment-

The present embodiment above describes a case where the present invention is applied to the inline four-cylinder diesel engine mounted in an automobile. The present invention is not limited to the automobile but can be applied to engines that are used for various purposes. Also, the number of cylinders and types of engines (inline-type engines, V-type engines, horizontally opposed engines, and the like) are in particular not limited.

Also, the present embodiments describe the engine 1 employing the piezo injectors 23 that turn into a full-open valve state only during an energized period so as to change the fuel injection ratio. The present invention can also be applied to engines employing variable injection rate injectors.

In addition, the present embodiments describe the maniveter 77 including the NSR catalyst 75 and the DPNR catalyst 76. The maniverter 77 may include the NSR catalyst 75 and a DPF (Diesel Paticulate Filter).

It is noted that, when the above-described decompression correction for the reference target rail pressure is carried out, operations described below may parallelly be carried out as a method of preventing the occurrence of the accidental fire without fail. First, it can be cited that the injection timing of the pilot injection is transferred to the advance angle side. An advance angle amount in this case is set to a range in which the fuel is not attached to wall surfaces. Next, the increase correction of the pilot injection amount (in particular, increase correction of the second pilot injection amount) is cited. As an increase correction amount in this case, an endothermic amount in the endothermic reaction in the second pilot injection is suppressed to a predetermined amount or less, and is set in a range where the ignition delay of the fuel is kept to the minimum.

### Industrial Applicability

The present invention can be applied to combustion control to solve combustion deterioration contributing to a lack of preheating in a preheating period, with respect to a common rail in-cylinder direct injection multi-cylinder diesel engine mounted in an automobile.

### Description of the Reference Numeral

1 Engine (Internal combustion engine)
15a Intake port
21 Supply pump
22 Common rail
23 Injector (Fuel injection valve)
3 Combustion chamber
40 Crank position sensor
49 Intake temperature sensor
4A Outside air pressure sensor
4B In-cylinder pressure sensor

## Claims

1. A combustion control apparatus of an internal combustion engine (1) of a compression self-igniting type that is configured to carry out at least a main injection and a pilot injection to be executed prior to the main injection, as a fuel injection from a fuel injection valve (23) into a combustion chamber (3), the combustion control apparatus of the internal combustion engine (1) comprising
a crank position sensor configured to output a detection signal at each rotation of a crankshaft by a predetermined angle; and
a fuel injection pressure reduction means adapted to reduce fuel injection pressure only by a predetermined amount when an ignition delay of premixed combustion in the pilot injection in the combustion chamber (3) increases due to a use of low cetane number fuel as a determination result whether the low cetane number fuel is used or not, the determination result determined based on a revolution variation at a time of a combustion stroke by the detection signal of the crank position sensor (40), **characterized in that**
the fuel injection pressure reduction means is adapted to reduce the fuel injection pressure only by a predetermined amount set in accordance with required power,
wherein the fuel injection pressure reduction means is adapted to increase a reduction correction amount of the fuel injection pressure to be set as the required power is reduced.

2. The combustion control apparatus of the internal combustion engine (1) according to claim 1,
wherein the lowest value in a case where the fuel injection pressure is reduced by the fuel injection pressure reduction means is set, and the fuel injection pressure is set to a value that is equal to or more than the lowest value.

3. The combustion control apparatus of the internal combustion engine (1) according to claim 1,
wherein the pilot injection is executed by at least two-time divisional pilot injections, and when a heat production rate in the combustion chamber (3) is less than a predetermined value in a period from the injection completion of a first pilot injection to the injection start of a second pilot injection, the fuel injection pressure reduction means for reducing the fuel injection pressure only by the predetermined amount.

4. The combustion control apparatus of the internal combustion engine (1) according to claim 1,
wherein when the fuel injection pressure is reduced only by the predetermined amount by the fuel injection pressure reduction means, an injection period of the main injection is extended in accordance with the predetermined amount.

## Patentansprüche

1. Verbrennungssteuergerät einer Brennkraftmaschine (1) einer kompressions-selbstzündenden Bauart, die so konfiguriert ist, dass sie zumindest eine Haupteinspritzung und eine Voreinspritzung, die vor der Haupteinspritzung auszuführen ist, als eine Kraftstoffeinspritzung von einem Kraftstoffeinspritzventil (23) in eine Brennkammer (3) durchführt, wobei das Verbrennungssteuergerät der Brennkraftmaschine (1) aufweist:
einen Kurbelpositionssensor, der dazu konfiguriert ist, ein Erfassungssignal bei jeder Drehung einer Kurbelwelle um einen vorbestimmten Winkel auszugeben; und
ein Kraftstoffeinspritzdruckverringerungsmittel, das dazu angepasst ist, Kraftstoffeinspritzdruck lediglich um einen vorbestimmten Betrag zu verringern, wenn eine Zündverzögerung einer Vorgemischverbrennung in der Voreinspritzung in der Brennkammer (3) infolge einer Verwendung eines Kraftstoffs mit niedriger Cetanzahl als ein Bestimmungsergebnis darüber zunimmt, ob der Kraftstoff mit niedriger Cetanzahl verwendet wird oder nicht, wobei das Bestimmungsergebnis auf Grundlage einer Drehzahlvariation zu einem Zeitpunkt eines Verbrennungstakts durch das Erfassungssignal des Kurbelpositionssensors (40) bestimmt wird, **dadurch gekennzeichnet, dass**
das Kraftstoffeinspritzdruckverringerungsmittel dazu angepasst ist, den Kraftstoffeinspritzdruck lediglich um einen vorbestimmten Betrag zu verringern, der in Übereinstimmung mit der erforderlichen Leistung eingestellt ist,
wobei das Kraftstoffeinspritzdruckverringerungsmittel dazu angepasst ist, einen Verringerungskorrekturbetrag des Kraftstoffeinspritzdrucks so zu erhöhen, dass er eingestellt wird, wenn die erforderliche Leistung verringert wird.

2. Verbrennungssteuergerät der Brennkraftmaschine (1) gemäß Anspruch 1,
wobei der niedrigste Wert in einem Fall, dass der Kraftstoffeinspritzdruck verringert wird, durch das Kraftstoffeinspritzdruckverringerungsmittel eingestellt ist, und der Kraftstoffeinspritzdruck auf einen Wert eingestellt ist, der gleich wie oder größer als der niedrigste Wert ist.

3. Verbrennungssteuergerät der Brennkraftmaschine (1) gemäß Anspruch 1,
wobei die Voreinspritzung durch zumindest zweimalige Teilvoreinspritzungen ausgeführt wird, und wenn eine Wärmeerzeugungsrate in der Brennkammer (3) niedriger als ein vorbestimmter Wert in einer Zeitspanne von der Einspritzvollendung einer ersten Voreinspritzung zu dem Einspritzstart einer zweiten Voreinspritzung ist, das Kraftstoffeinspritzdruckverringerungsmittel zum Verringern des Kraftstoffeinspritzdrucks lediglich durch den vorbestimmten Betrag dient.

4. Verbrennungssteuergerät der Brennkraftmaschine (1) gemäß Anspruch 1,
wobei dann, wenn der Kraftstoffeinspritzdruck lediglich um den vorbestimmten Betrag durch das Kraftstoffeinspritzdruckverringerungsmittel verringert wird, eine Einspritzzeitdauer der Haupteinspritzung in Übereinstimmung mit dem vorbestimmten Betrag verlängert wird.

## Revendications

1. Appareil de commande de combustion d'un moteur à combustion interne (1) du type à autoallumage par compression qui est configuré pour réaliser au moins une injection principale et une injection pilote à exécuter avant l'injection principale, en tant qu'injection de carburant, à partir d'une soupape d'injection de carburant (23) dans une chambre de combustion (3), l'appareil de commande de combustion du moteur à combustion interne (1) comprenant :
un capteur de position de vilebrequin configuré pour produire un signal de détection à chaque rotation d'un vilebrequin selon un angle prédéterminé ; et
un moyen de réduction de pression d'injection de carburant adapté pour réduire la pression d'injection de carburant uniquement selon une quantité prédéterminée lorsqu'un retard d'allumage de combustion pré-mélangée dans l'injection pilote dans la chambre de combustion (3) augmente en raison d'une utilisation d'un carburant à faible indice de cétane en tant que résultat de détermination, si le carburant à faible indice de cétane est utilisé ou pas, le résultat de détermination étant déterminé en fonction d'une variation de révolution au moment d'une course de combustion par le signal de détection du capteur de position de vilebrequin (40), **caractérisé en ce que** :
le moyen de réduction de pression d'injection de carburant est adapté pour réduire la pression d'injection de carburant uniquement selon une quantité prédéterminée, déterminée selon la puissance requise,
dans lequel le moyen de réduction de pression d'injection de carburant est adapté pour augmenter une quantité de correction de réduction de la pression d'injection de carburant à déterminer lorsque la puissance requise est réduite.

2. Appareil de commande de combustion d'un moteur à combustion interne (1) selon la revendication 1,
dans lequel la valeur la plus faible dans le cas dans lequel la pression d'injection de carburant est réduite par le moyen de réduction de pression d'injection de carburant, est déterminée, et la pression d'injection de carburant est réglée sur une valeur qui est égale ou supérieure à la valeur la plus faible.

3. Appareil de commande de combustion d'un moteur à combustion interne (1) selon la revendication 1,
dans lequel l'injection pilote est exécutée par au moins des injections pilotes de division en deux temps, et lorsqu'un taux de production de chaleur dans la chambre de combustion (3) est inférieur à une valeur prédéterminée dans une période allant de l'achèvement de l'injection d'une première injection pilote jusqu'au début de l'injection d'une seconde injection pilote, le moyen de réduction de pression d'injection de carburant étant prévu pour réduire la pression d'injection de carburant uniquement selon la quantité prédéterminée.

4. Appareil de commande de combustion d'un moteur à combustion interne (1) selon la revendication 1,
dans lequel, lorsque la pression d'injection de carburant est réduite uniquement selon la quantité prédéterminée par le moyen de réduction de pression d'injection de carburant, une période d'injection de l'injection principale est prolongée selon la quantité prédéterminée.
